# EUROPEAN PATENT SPECIFICATION

(11) **EP 3 355 546 B1**
(45) Date of publication and mention of the grant of the patent: **30.12.2020**
(21) Application number: 18151565.1
(22) Date of filing: 15.01.2018
(51) Int. Cl.: H04L 29/06, H04W 12/06, H04W 12/04

(54) **DEVICE IDENTIFICATION ENCRYPTION**
VORRICHTUNGSIDENTIFIZIERUNGSVERSCHLÜSSELUNG
CHIFFREMENT D'IDENTIFICATION DE DISPOSITIFS

(30) Priority: 31.01.2017 US 201715420865
(43) Date of publication of application: 01.08.2018
(73) Proprietor: Hewlett Packard Enterprise Development LP, Houston, TX 77070 (US)
(72) Inventor: KAIPPALLIMALIL, Mathew M., Plano, Texas 75024 (US); WILLIAMSON, David C., Plano, Texas 75024 (US); KENYON, Brad Thomas, Omaha, Nevada 68154 (US); TIAN, Lu, Plano, Texas 75024 (US)
(74) Representative: Haseltine Lake Kempner LLP

(56) References cited:
- US-A1- 2008 086 646
- US-A1- 2014 254 466
- US-A1- 2015 046 340

## Description

### BACKGROUND

Wireless communication networks have increased in popularity with the advent of wireless devices, such as smartphones, mobile devices, etc. An authentication server, such as an authentication, authorization and accounting (AAA) server may handle requests for access to network resources.

US 2014/254466 A1 describes methods, systems and devices for broadcasting messages of different packet formats in interleaving fashions, wherein a transmitter may broadcast a first packet in a first format configured to be well-suited for a first software implementation of a receiver and broadcast a second packet in a second format that is associated with a second software implementation (e.g., firmware, application, etc.). The receiver may receive and process the first packet to detect information that indicates the presence of messages of the second packet type, adjust the receiver (i.e., change a behavior of the second software implementation) in response to detecting information, receive and process the second packet via the second software implementation, and perform an action based on the processed second packet. In some described examples, the first and/or second messages may include portions of data that may be combined by the receiver.

US 2008/086646 A1 describes a system for secure transfer of encrypted data that involves a sender client, a recipient client, a main server, and a key server. The sender client receives instructions from a first user identifying transfer data and a recipient identifier, creates an encoding key, encodes the transfer data using the key, and communicates the key and the recipient identifier to a main server. The main server communicates the key and the recipient identifier to the key server, which associates the recipient identifier with a secure package identifier and communicates the secure package identifier to the main server, which communicates the secure package identifier to the sender client. The recipient client receives and identifies the secure package identifier and the encoded transfer data, receives from a second user a user identifier, and communicates the user identifier and the secure package identifier to the main server, which communicates them to the key server. The key server communicates the key to the main server only if the secure package identifier received from the recipient client matches the secure package identifier created by the main server and if the user identifier matches the recipient identifier.

US 2015/046340 A1 describes methods and systems for verifying personal identifiers in transactions such as financial transactions. In a described exemplary method, an authentication server computer may provide an account number and a personal identifier such as a PIN to a payment processing network server computer. The payment processing network server computer may then determine which of a plurality of authentication processes to initiate.

### BRIEF DESCRIPTION OF THE DRAWINGS

The following detailed description references the drawings, wherein:
FIG. 1 is a block diagram of an example system for device identification encryption;
FIG. 2 is a block diagram of an example method for device identification encryption;
FIG. 3 is a block diagram of another example method for device identification encryption; and
FIG. 4 is a block diagram of an example system for device identification encryption.

### DETAILED DESCRIPTION

An authentication server may, for example, authenticate a wireless device to verify and identify the wireless device for communication over a network. Wireless devices may have a variety of associated information used for uniquely identifying the wireless device, routing the wireless device, etc. For example, device identifiers, such as an International Mobile Subscriber Identity (IMSI), may be used to identify a wireless device to the authentication server and/or other network entities.

If an unauthorized entity, such as a malicious actor, gains access to device information, such as the device identifier, the unauthorized entity may be able to determine the physical location of a wireless device, access to accounts associated with the wireless device, etc.

Accordingly, it may be beneficial for the authentication server to conceal device information when transferring device information on a network. Concealing device information may be especially useful when the authentication server is communication with network entities on less secure networks, such as networks provided by certain Wi-Fi access points.

A routing indicator is included with the device information. A routing indicator may indicate a location on a network, such as a network entity, access point, etc. where the device information is to be sent. Although it may be beneficial to conceal the device information, as described above, it may be detrimental to fully conceal the routing indicator, as the routing indicator may be used by network entities other than the authentication server to route the device information.

Aspects of the systems and methods for device identification encryption discussed herein describe a mechanism where a network entity, such as the authentication server can insert a routing indicator with encrypted device information, while maintaining the data sizes suggested by standards.

The device information is encrypted with a first encryption key known to the authentication server, but unknown to any other network entities. The combined device information and routing indicator may be encrypted using a public key known to other network entities. In this manner, the device information may be concealed, but the routing indicator may be accessed by other network entities.

A system for device identification encryption includes a combination engine to combine an encrypted device identification and a routing indicator resulting in a combined device identification. The system also includes an encryption engine to encrypt the combined device identification and a transmission engine to transmit the encrypted combined device identification.

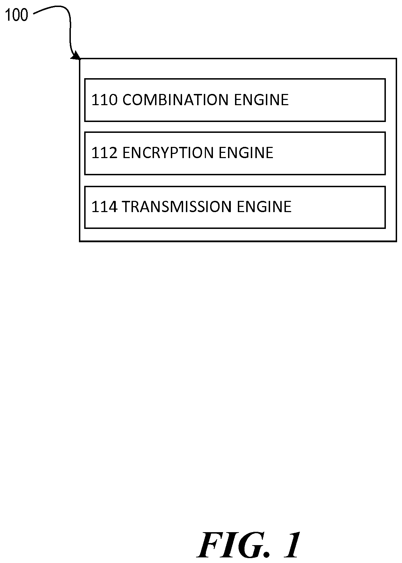

FIG. 1 is a block diagram of an example system 100 for device identification encryption. In one aspect, the system 100 may be part of and/or otherwise incorporated into an authentication server, such as an authentication, authorization and accounting (AAA) server. The system 100 may implement various engines to provide or support any of the device identification encryption features described herein. In the example shown in Figure 1, the system 100 implements a combination engine 110, an encryption engine 112 and a transmission engine 114. Many of the features disclosed herein are described with respect to the combination engine 110, the encryption engine 112 and the transmission engine 114, though various other implementations are possible. Furthermore, in FIG. 1 and other figures described herein, different numbers of components or entities may be depicted.

The system 100 may implement the engines 110, 112 and 114 (including components thereof) in various ways, for example as hardware and programming. The programming for the engines 110, 112 and 114 may take the form of processor-executable instructions stored on a non-transitory machine-readable storage medium, and the processor-executable instructions may, upon execution, cause hardware to perform any of the features described herein. Implementations of engines 110-114 include, electronic circuitry (i.e., hardware) that implements the functionality of engines 110-114, such as an integrated circuit, programmable circuit, application integrated circuit (ASIC), controller, processor, semiconductor, processing resource, chipset, or other type of hardware component capable of the functionality of engines 110-114. Alternatively, engines 110-114 may include instructions (e.g., stored on a machine-readable medium) that, when executed by a hardware component (e.g., controller and/or processor), implements the functionality of engines 110-114. Although FIG. 1 illustrates engines 110, 112, and 114 as separate components, this was done for illustration purposes and not for purposes of limiting the disclosure. For example, engines 110, 112, and 114 may each include separate components, while in another implementation, engines 110, 112, 114 or combination thereof may be included as a single component.

Combination engine 110 may be configured to combine an encrypted device identification and a routing indicator resulting in a combined device identification. The encrypted device identification may be used to identify a device on a network. The encrypted device identification may be associated with device information, including a device identification. In some aspects, encryption engine 112 may be configured to encrypt device information, using a first encryption key, resulting in the encrypted device identification.

The device identification may be unique to a particular user on the network. One example format that may be used for the device identification is an International Mobile Subscriber Identity (IMSI). International mobile subscriber identity (IMSI) is a unique number associated with a subscriber of a cellular communications network. Example, cellular communication networks may include, for example, Global System for Mobile Communications (GSM) and Universal Mobile Telecommunications System (UMTS) network mobile phone users. In other words, the IMSI is a unique number identifying a subscriber. A portion of the IMSI may correspond to the cellular network carrier, while another portion may correspond to the subscriber.

The first encryption key may be unknown outside of the system. In other words, the first encryption key may be private to authentication server and not known to other network entities. Encryption engine 112 may be configured to incorporate a first type of encryption, such as Data Encryption Standard (DES). DES is a symmetric key algorithm used for encryption. Encryption engine 112 may be configured to perform the first type of encryption using the first encryption key. The encrypted device identification may conform to the standards used by the network. For example, in one aspect a network may use device identifications of a certain size, such as eight bytes. Accordingly, the device identification may have a size of eight bytes. After encryption, the encrypted device identity may also have a size of eight bytes.

Combination engine 110 may be configured to combine the encrypted user identification to the routing indicator in a variety of ways. For example, the routing indicator may be affixed to the end of the encrypted device identification. As another example, the encrypted device identification may be affixed to the beginning of the routing indicator. Although two examples have been provided, other forms of combining the encrypted device identity and routing indicator may be used. Similarly, combination engine 110 may be configured to combine the encrypted device identification with a random component. The random component, may be, for example, a randomly generated value affixed to the encrypted user identification and/or routing indicator.

The routing indicator may be a value used to identify a network, an access point and/or portion of a network to transmit device information to. For example, a routing indicator may identify a cell tower, a Wi-Fi access point, etc. As another example, the routing indicator may be used to determine a specific network, such as a home network, for a network device. In other words, an authentication server, a device, and/or component of an operator network may use the routing indicator to transmit data between network identities and the authentication server that created the temporary identity. Similar to the device identification, certain networks may have certain standards for the size of a routing indicator. In one aspect, the standard size for a routing indicator may be eight bytes. Accordingly, the combination engine 110 may be configured to use a routing indicator that conforms to the standard. In some aspects, the routing indicator may be smaller than the standard size used by the network. In these aspects, the routing indicator may be padded with additional data. Padding refers to the process of adding additional data to a number. The additional data may be, for example, randomly generated numbers.

In one aspect, the size of the routing indicator may be eight bytes and the size of the encrypted device identification may be eight bytes. Accordingly, the size of the combined device identification may be 16 bytes.

Encryption engine 112 may be configured to encrypt the combined device identification via a second encryption key. The second encryption key may be provided by a device, system, actor, etc. outside of system 100, such as an operator of a network. The second encryption key may be known to other entities connected to the network, so that these entities can decrypt the data and access the device identification.

Encryption engine 112 may be configured to incorporate a second type of encryption. The second type of encryption may be different than the first type of encryption. For example, the first type of encryption may be DES and the second type of encryption may be Advanced Encryption Standard (AES) encryption. Of course, these are only examples and other types of encryption may be used. The size of the combined device identification after the second encryption is performed may a standard used by the network. As discussed in the above example, a standard size used by a network may be 16 bytes. Accordingly, after the second encryption is performed, the size of the encrypted combined user identification may also be 16 bytes.

Combination engine 110 may also be configured to combine the encrypted combined device identification with a tag value and/or an index value. The encrypted combined device identification further combined with the tag value and/or index value may be referred to as a temporary identity. The tag value may also be used to indicate additional information. For example, in some aspects, there may be different types of temporary identities. Different types of temporary identities may include, for example, Pseudonyms, FastReAuthentication IDs, etc. The tag value may be used to indicate what type of identity is being used. Other types of information that can be indicated by the tag value include whether an authentication and key agreement (AKA) is being used, whether there is a SIM identity, etc.

The index value may be used to identify a reference to a key used in the encryption. The index value may be a reference to a key and not the key itself. The index value may identify a reference to, for example, the first encryption key, the second encryption key, etc. The index value may be, for example, a number that indicates a key to use from a key store. The contents of the key store may remain private. By using the index value, the identity of the key may be kept private, while still communication which key was used.

When the temporary identity is being used, the authentication server may decrypt the supplied value. To do so, the AAA may use the index value to determine which key to use to decrypt the encrypted identity. The tag value and index value may also conform to a standard size used by the network. For example, the combined size of the tag and index value may be 10 bits. If the combined size of the tag and index value is less than 10 bits, additional padding bits may be used. For example padding bits may take the form of random numbers appended to the end of the tag and index value, the beginning of the tag and index value, etc.

As discussed above, the size of the encrypted combined device identification may also be 16 bytes. Sixteen bytes may be equivalent to 128 bits. After adding the tag and index value, the total size of the temporary identify may be 138 bits. In some aspects, a network standard may use device identifiers of a certain character length. Accordingly, in some aspects the combination engine may encode the temporary identification. For example, the combination engine may base 64 encode the 138 bit temporary identity value to create a 23 character value. In this manner, the device identification is concealed while still conforming to the standard device identifier size of the network.

Transmission engine may be configured to transmit the encrypted combined device identification. Transmission Engine 114 may be configured to transmit the temporary identification and/or encrypted combined device identification to an address specified in the routing indicator. The address may correspond to, for example, a network location, an access point, etc.

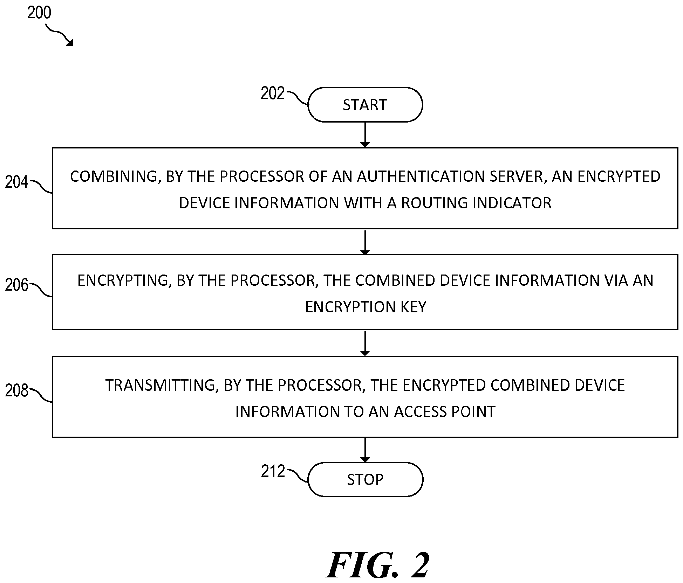

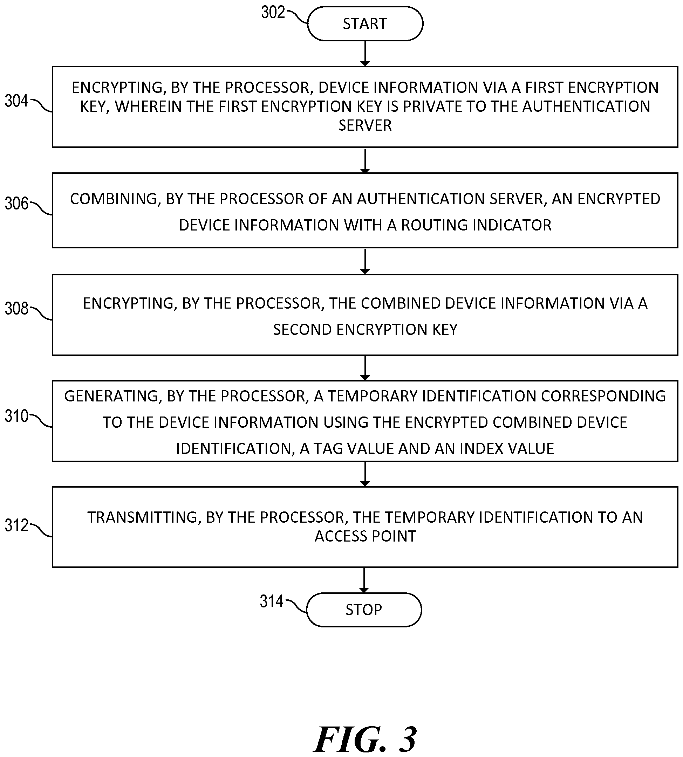

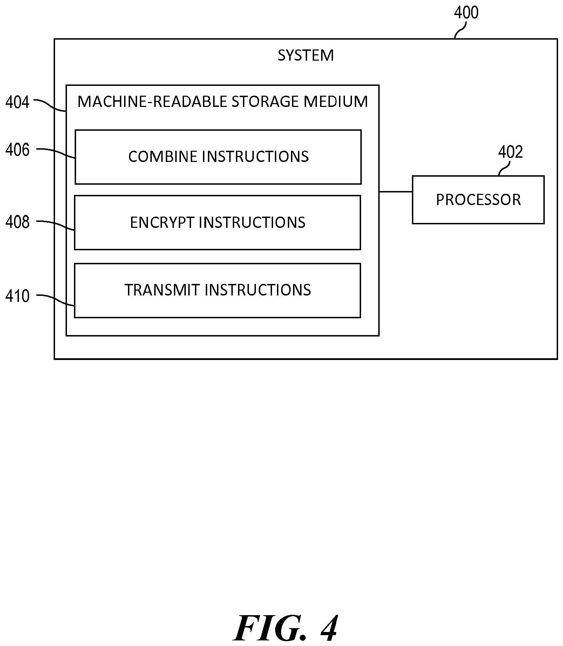

Referring now to FIGS. 2 and 3, flow diagrams are illustrated in accordance with various examples of the present disclosure. The flow diagrams represent processes that may be utilized in conjunction with various systems and devices as discussed with reference to the preceding figures, such as, for example, system 100 described in reference to Fig. 1 and/or system 400 described in reference to Fig. 4. While illustrated in a particular order, the flow diagrams are not intended to be so limited. Rather, it is expressly contemplated that various processes may occur in different orders and/or simultaneously with other processes than those illustrated. As such, the sequence of operations described in connection with FIGS. 2-3 are examples and are not intended to be limiting. Additional or fewer operations or combinations of operations may be used or may vary without departing from the scope of the disclosed examples. Thus, the present disclosure merely sets forth possible examples of implementations, and many variations and modifications may be made to the described examples.

FIG. 2 is a flowchart of an example method 200 for device identification encryption. Method 200 may start at block 202 and continue to block 204, where the method 200 may include combining, by the processor of an authentication server, an encrypted device information with a routing indicator. The encrypted user identity may be eight bytes and the routing indicator may be eight bytes. The encrypted user identity may correspond to device information, such as a device identifier that has been encrypted via a first encryption key that is private to an authentication server.

At block 206, the method may include encrypting, by the processor, the combined device information via an encryption key, such as a second encryption key. The first encryption key may be of a first type of encryption and the second encryption key may be of a second type of encryption. For example, the first encryption key may utilize Data Encryption Standard (DES). The second encryption key may utilize Advanced Encryption Standard (AES). The first encryption key may be concealed from devices on the network other than the authentication server. The second encryption key may be provided by an operator associated with a network, such as, for example, a cellular network. The second encryption key may be known to network entities other than the user device. The encrypted device identification may also be combined with a random component. The random component, may be, for example, a randomly generated value affixed to the encrypted user identification and/or routing indicator.

At block 208, the method may include transmitting, by the processor, the encrypted combined device information to an access point. The encrypted combined device information may be transmitted the temporary identification and/or encrypted combined device identification to an address specified in the routing indicator. The address may correspond to, for example, a network location, an access point, etc. The method may proceed to block 210, where the method may end.

FIG. 3 is a flowchart of an example method 300 for device identification encryption. Method 300 may start at block 302 and continue to block 304, where the method 300 may include encrypting, by the processor, device information via a first encryption key. The first encryption key is private to the authentication server. The encrypted user identity may be eight bytes. The combined user identification may be 16 bytes. At block 306, the method may include combining, by the processor of an authentication server, an encrypted device information with a routing indicator. The routing indicator may be eight bytes.

At block 308, the method may include encrypting, by the processor, the combined device information via an encryption key, such as a second encryption key. The first encryption key may be of a first type of encryption and the second encryption key may be of a second type of encryption. For example, the first encryption key may utilize Data Encryption Standard (DES). The second encryption key may utilize Advanced Encryption Standard (AES). The first encryption key may be concealed from devices on the network other than the authentication server. The second encryption key may be provided by an operator associated with a network, such as, for example, a cellular network. The second encryption key may be known to network entities other than the user device. The encrypted device identification may also be combined with a random component. The random component, may be, for example, a randomly generated value affixed to the encrypted user identification and/or routing indicator. At block 310, the method may include generating, by the processor, a temporary identification corresponding to the device information using the encrypted combined device identification, tag value, and/or index value.

The tag value may also be used to indicate additional information. For example, in some aspects, there may be different types of temporary identities. Different types of temporary identities may include, for example, pseudonyms, FastReAuthentication IDs, etc. The tag value may be used to indicate what type of identity is being used. Other types of information that can be indicated by the tag value include whether an authentication and key agreement (AKA) is being used, whether there is a SIM identity, etc.

The index value may be used to identify a reference to a key used in the encryption. The index value may be a reference to a key and not the key itself. The index value may identify a reference to, for example, the first encryption key, the second encryption key, etc. The index value may be, for example, a number that indicates a key to use from a key store. The contents of the key store may remain private. By using the index value, the identity of the key may be kept private, while still communication which key was used.

At block 312, the method may include transmitting, by the processor, the encrypted combined device information to an access point. The encrypted combined device information may be transmitted the temporary identification and/or encrypted combined device identification to an address specified in the routing indicator. The address may correspond to, for example, a network location, an access point, etc. The method may proceed to block 314, where the method may end.

FIG. 4 is a block diagram of an example system 400 for device identification encryption. System 400 may be similar to system 100 of FIG. 1, for example. In the example illustrated in FIG. 4, system 400 includes a processor 402 and a machine-readable storage medium 404. Although the following descriptions refer to a single processor and a single machine-readable storage medium, the descriptions may also apply to a system with multiple processors and multiple machine-readable storage mediums. In such examples, the instructions may be distributed (e.g., stored) across multiple machine-readable storage mediums and the instructions may be distributed (e.g., executed by) across multiple processors.

Processor 402 may be at least one central processing unit (CPU), microprocessor, and/or other hardware devices suitable for retrieval and execution of instructions stored in machine-readable storage medium 404. In the example illustrated in FIG. 4, processor 502 may fetch, decode, and execute instructions 406, 408, 410 to perform user identity encryption. Processor 402 may include at least one electronic circuit comprising a number of electronic components for performing the functionality of at least one of the instructions in machine-readable storage medium 404. With respect to the executable instruction representations (e.g., boxes) described and shown herein, it should be understood that part or all of the executable instructions and/or electronic circuits included within one box may be included in a different box shown in the figures or in a different box not shown.

Machine-readable storage medium 404 may be any electronic, magnetic, optical, or other physical storage device that stores executable instructions. Thus, machine-readable storage medium 404 may be, for example, Random Access Memory (RAM), an Electrically-Erasable Programmable Read-Only Memory (EEPROM), a storage drive, an optical disc, and the like. Machine-readable storage medium 404 may be disposed within system 400, as shown in FIG. 4. In this situation, the executable instructions may be "installed" on the system 400. Machine-readable storage medium 404 may be a portable, external or remote storage medium, for example, that allows system 400 to download the instructions from the portable/external/remote storage medium. In this situation, the executable instructions may be part of an "installation package". As described herein, machine-readable storage medium 404 may be encoded with executable instructions for context aware data backup. The machine-readable storage medium may be non-transitory.

Combine instructions 408, when executed by a processor (e.g., 402), may cause system 400 to combine an encrypted device identification with a routing indicator resulting in a combined device identification. The routing indicator may be eight bytes. The combined user identification may be 16 bytes. The encrypted user identification may also be combined with a random component. The random component, may be, for example, a randomly generated value affixed to the encrypted user identification and/or routing indicator.

In some aspects, the encrypted device identification may be associated with a device identification. Accordingly, the encrypted device identification may be created by encrypting a device via a first encryption key. The first encryption key is private to an authentication server.

Encrypt instructions 406, when executed by a processor (e.g., 402), may also cause system 400 to encrypt the combined device identification via a second encryption key. The first encryption key may be of a first type of encryption and the second encryption key may be of a second type of encryption. For example, the first encryption key may utilize Data Encryption Standard (DES). The second encryption key may utilize Advanced Encryption Standard (AES). The first encryption key may be concealed from other devices on a network. The second encryption key may be provided by an operator associated with a network, such as, for example, a cellular network. The second encryption key may be known to network entities other than the user device.

Transmit instructions 408, when executed by a processor (e.g., 402), may cause system 400 to transmit the encrypted combined device identification. The encrypted combined device identification may be transmitted to an address specified in the routing indicator. The address may correspond to, for example, a network location, an access point, etc.

In some examples, the encryption key is a second encryption key of a second type and the encrypt instructions 406, when executed by a processor (e.g., 402), may also cause system 400 to encrypt information of a user device via the first encryption key of the first type other than the second type, resulting in the encrypted device identification.

In some examples, the second encryption key is provided by an operator of a network and the second encryption key is concealed from other network entities on the network.

In some other examples, combine instructions 408, when executed by a processor (e.g., 402), may cause system 400 to affix the routing indicator to a beginning of the encrypted device identification.

In some other examples, generation instructions, when executed by a processor (e.g., 402), may cause system 400 to generate a temporary identification using the encrypted combined device identification, a tag value and an index value.

The foregoing disclosure describes a number of examples for device identification encryption. The disclosed examples may include systems, devices, computer-readable storage media, and methods for device identification encryption. For purposes of explanation, certain examples are described with reference to the components illustrated in FIGS. 1-4. The functionality of the illustrated components may overlap, however, and may be present in a fewer or greater number of elements and components. Further, all or part of the functionality of illustrated elements may co-exist or be distributed among several geographically dispersed locations. Further, the disclosed examples may be implemented in various environments and are not limited to the illustrated examples.

Further, the sequence of operations described in connection with FIGS. 1-4 are examples and are not intended to be limiting. Additional or fewer operations or combinations of operations may be used or may vary without departing from the scope of the disclosed claims. Furthermore, implementations consistent with the disclosed examples need not perform the sequence of operations in any particular order. Thus, the present disclosure merely sets forth possible examples of implementations, and many variations and modifications may be made to the described examples without departing from the scope of the disclosed claims.

## Claims

1. A system (100) comprising:
a combination engine (110) to combine an encrypted device identification associated with identifying a device accessing a network and a routing indicator, the combination resulting in a combined device identification, wherein the encrypted device identification is encrypted using a first encryption key that is unknown to one or more additional devices connected to the network;
an encryption engine (112) to encrypt the combined device identification, wherein the combined device identification is encrypted using a second encryption key that is known to the one or more additional devices connected to the network; and
a transmission engine (114) to transmit the encrypted combined device identification when communicating information from the device via the network.

2. The system (100) of claim 1, wherein the first encryption key is a private key that is known to an authentication server.

3. The system (100) of claim 2, wherein the first encryption key is used to perform a first type of encryption and the second encryption key is used to perform a second type of encryption other than the first type.

4. The system (100) of claim 2, wherein the second encryption key is provided by a network operator.

5. The system (100) of claim 1, wherein the transmission engine (114) transmits the encrypted combined device identification to an access point indicated by the routing indicator.

6. The system (100) of claim 1, wherein the encryption engine (112) is to encrypt device identification identifying the device accessing the network, the encryption resulting in the encrypted device identification.

7. The system (100) of claim 1, wherein the combination engine (110) combines the encrypted device identification with the routing indicator via affixation of the routing indicator to an end of the encrypted device identification.

8. The system (100) of claim 1, wherein the encrypted device identification is at least eight bytes, the routing indicator is at least eight bytes and the combined device identification is at least 16 bytes.

9. The system (100) of claim 1, wherein the combination engine (110) is to combine the encrypted combined device identification with a tag and index value to create a temporary identification.

10. A method (200) comprising:
combining (204), by a processor of an authentication server, encrypted device information associated with identifying a device accessing a network with a routing indicator, the combination resulting in a combined device identification, wherein the encrypted device identification is encrypted using a first encryption key that is unknown to one or more additional devices connected to the network;
encrypting (206), by the processor, the combined device information using a second encryption key, wherein the second encryption key is known to the one or more additional devices connected to the network; and
transmitting (208), by the processor, the encrypted combined device information to an access point when communicating information from the device via the network.

11. The method (200) of claim 10, comprising:
generating, by the processor, a temporary identification corresponding to the device information using the encrypted combined device identification, a tag value and an index value.

12. The method (200) of claim 10, wherein the first encryption key is a private key that is known to the authentication server.

13. The method (200) of claim 10, wherein the device associated with the encrypted device information is connected to a first network and the routing indicator identifies an access point associated with a second network.

14. The method (200) of claim 13, wherein the first encryption key is concealed from the one or more additional network devices and network entities connected to the first network and the second network other than the authentication server.

15. A non-transitory machine-readable storage medium (404) storing instructions thereon, the instructions executable by a processor (402) of a system (400) to cause the system (400) to:
combine (406) an encrypted device identification associated with identifying a user device accessing a network with a routing indicator, the combination resulting in a combined device identification, wherein the encrypted device identification is encrypted using a first encryption key that is unknown to one or more additional devices connected to the network;
encrypt (408) the combined device identification via a second encryption key, wherein the second encryption key is known to the one or more additional devices connected to the network; and
transmit (410) the encrypted combined device identification based on the routing indicator when communicating information from the user device via the network.

## Patentansprüche

1. System (100), das Folgendes umfasst:
eine Kombinations-Engine (110), um eine verschlüsselte Vorrichtungsidentifikation, die einer Identifizierung einer auf ein Netzwerk zugreifenden Vorrichtung zugeordnet ist, und einen Leitwegindikator zu kombinieren, wobei die Kombination zu einer kombinierten Vorrichtungsidentifikation führt, wobei die verschlüsselte Vorrichtungsidentifikation unter Verwendung eines ersten Verschlüsselungsschlüssels verschlüsselt wird, der einer oder mehreren zusätzlichen Vorrichtungen, die mit dem Netzwerk verbunden sind, unbekannt ist;
eine Verschlüsselungs-Engine (112), um die kombinierte Vorrichtungsidentifikation zu verschlüsseln, wobei die kombinierte Vorrichtungsidentifikation unter Verwendung eines zweiten Verschlüsselungsschlüssels verschlüsselt wird, der dem einen oder den mehreren zusätzlichen Vorrichtungen, die mit dem Netzwerk verbunden sind, bekannt ist; und
eine Übertragungs-Engine (114), um die verschlüsselte kombinierte Vorrichtungsidentifikation zu übertragen, wenn Informationen von der Vorrichtung über das Netzwerk übertragen werden.

2. System (100) nach Anspruch 1, wobei der erste Verschlüsselungsschlüssel ein privater Schlüssel ist, der einem Authentifizierungsserver bekannt ist.

3. System (100) nach Anspruch 2, wobei der erste Verschlüsselungsschlüssel verwendet wird, um eine erste Art von Verschlüsselung durchzuführen, und der zweite Verschlüsselungsschlüssel verwendet wird, um eine zweite Art von Verschlüsselung durchzuführen, die sich von der ersten Art unterscheidet.

4. System (100) nach Anspruch 2, wobei der zweite Verschlüsselungsschlüssel von einem Netzbetreiber bereitgestellt wird.

5. System (100) nach Anspruch 1, wobei die Kombinations-Engine (114) die verschlüsselte kombinierte Vorrichtungsidentifikation an einen Zugriffspunkt überträgt, der durch den Leitwegindikator angegeben wird.

6. System (100) nach Anspruch 1, wobei die Verschlüsselungs-Engine (112) dazu dient, eine Vorrichtungsidentifikation zu verschlüsseln, die die Vorrichtung identifiziert, die auf das Netzwerk zugreift, wobei die Verschlüsselung zu der verschlüsselten Vorrichtungsidentifikation führt.

7. System (100) nach Anspruch 1, wobei die Kombinations-Engine (110) die verschlüsselte Vorrichtungsidentifikation mit dem Leitwegindikator durch Anbringung des Leitwegindikators an einem Ende der verschlüsselten Vorrichtungsidentifikation kombiniert.

8. System (100) nach Anspruch 1, wobei die verschlüsselte Vorrichtungsidentifikation wenigstens acht Bytes, der Leitwegindikator wenigstens acht Bytes und die kombinierte Vorrichtungsidentifikation wenigstens 16 Bytes beträgt.

9. System (100) nach Anspruch 1, wobei die Kombinations-Engine (110) die verschlüsselte kombinierte Vorrichtungsidentifikation mit einer Markierung und einem Indexwert kombiniert, um eine temporäre Identifikation zu erzeugen.

10. Verfahren (200), das Folgendes umfasst:
Kombinieren (204), durch einen Prozessor eines Authentifizierungsservers, von verschlüsselten Vorrichtungsinformationen, die der Identifizierung einer Vorrichtung, die auf ein Netzwerk zugreift, zugeordnet sind, mit einem Leitwegindikator, wobei die Kombination zu einer kombinierten Vorrichtungsidentifikation führt, wobei die verschlüsselte Vorrichtungsidentifikation unter Verwendung eines ersten Verschlüsselungsschlüssels verschlüsselt wird, der einer oder mehreren zusätzlichen Vorrichtungen, die mit dem Netzwerk verbunden sind, unbekannt ist;
Verschlüsseln (206) der kombinierten Vorrichtungsinformationen durch den Prozessor unter Verwendung eines zweiten Verschlüsselungsschlüssels, wobei der zweite Verschlüsselungsschlüssel der einen oder mehreren zusätzlichen Vorrichtungen, die mit dem Netzwerk verbunden sind, bekannt ist; und
Übertragen (208) der verschlüsselten kombinierten Vorrichtungsinformationen durch den Prozessor an einen Zugriffspunkt, wenn Informationen von der Vorrichtung über das Netzwerk übertragen werden.

11. Verfahren (200) nach Anspruch 10, das Folgendes umfasst:
Erzeugen, durch den Prozessor, einer temporären Identifikation entsprechend der Vorrichtungsinformation unter Verwendung der verschlüsselten kombinierten Vorrichtungsidentifikation, eines Kennungswertes und eines Indexwertes.

12. Verfahren (200) nach Anspruch 10, wobei der erste Verschlüsselungsschlüssel ein privater Schlüssel ist, der dem Authentifizierungsserver bekannt ist.

13. Verfahren (200) nach Anspruch 10, wobei die Vorrichtung, die den verschlüsselten Vorrichtungsinformationen zugeordnet ist, mit einem ersten Netzwerk verbunden ist und der Leitwegindikator einen Zugriffspunkt identifiziert, der einem zweiten Netzwerk zugeordnet ist.

14. Verfahren (200) nach Anspruch 13, wobei der erste Verschlüsselungsschlüssel vor der einen oder den mehreren zusätzlichen Netzwerkvorrichtungen und Netzwerkeinheiten, die mit dem ersten Netzwerk und dem zweiten Netzwerk verbunden sind, außer dem Authentifizierungsserver verborgen wird.

15. Nicht flüchtiges maschinenlesbares Speichermedium (404), auf dem Anweisungen gespeichert sind, die durch einen Prozessor (402) eines Systems (400) ausführbar sind, um das System (400) zu Folgendem zu veranlassen:
Kombinieren (406) einer verschlüsselten Vorrichtungsidentifikation, die der Identifizierung einer Benutzervorrichtung, die auf ein Netzwerk zugreift, zugeordnet ist, mit einem Leitwegindikator, wobei die Kombination zu einer kombinierten Vorrichtungsidentifikation führt, wobei die verschlüsselte Vorrichtungsidentifikation unter Verwendung eines ersten Verschlüsselungsschlüssels verschlüsselt wird, der einer oder mehreren zusätzlichen Vorrichtungen, die mit dem Netzwerk verbunden sind, unbekannt ist;
Verschlüsseln (408) der kombinierten Vorrichtungsidentifikation über einen zweiten Verschlüsselungsschlüssel, wobei der zweite Verschlüsselungsschlüssel der einen oder mehreren zusätzlichen Vorrichtungen, die mit dem Netzwerk verbunden sind, bekannt ist; und
Übertragen (410) der verschlüsselten kombinierten Vorrichtungsidentifikation auf der Basis des Leitwegindikators bei der Kommunikation von Informationen von der Benutzervorrichtung über das Netzwerk.

## Revendications

1. Système (100) comprenant :
un moteur de combinaison (110) pour combiner une identification de dispositif chiffrée associée à l'identification d'un dispositif accédant à un réseau et un indicateur de routage, la combinaison résultant en une identification de dispositif combinée, l'identification de dispositif chiffrée étant chiffrée à l'aide d'une première clé de chiffrement inconnue d'un ou de plusieurs dispositifs supplémentaires connectés au réseau ;
un moteur de chiffrement (112) pour chiffrer l'identification de dispositif combinée, l'identification de dispositif combinée étant chiffrée à l'aide d'une seconde clé de chiffrement qui est connue du ou des dispositifs supplémentaires connectés au réseau ; et
un moteur de transmission (114) pour transmettre l'identification de dispositif combinée chiffrée lors de la communication d'informations depuis le dispositif par l'intermédiaire du réseau.

2. Système (100) selon la revendication 1, la première clé de chiffrement étant une clé privée qui est connue d'un serveur d'authentification.

3. Système (100) selon la revendication 2, la première clé de chiffrement étant utilisée pour réaliser un premier type de chiffrement et la seconde clé de chiffrement étant utilisée pour réaliser un second type de chiffrement autre que le premier type.

4. Système (100) selon la revendication 2, la seconde clé de chiffrement étant fournie par un opérateur de réseau.

5. Système (100) selon la revendication 1, le moteur de transmission (114) transmettant l'identification de dispositif combinée chiffrée à un point d'accès indiqué par l'indicateur de routage.

6. Système (100) selon la revendication 1, le moteur de chiffrement (112) devant chiffrer l'identification de dispositif identifiant le dispositif accédant au réseau, le chiffrement résultant en l'identification de dispositif chiffrée.

7. Système (100) selon la revendication 1, le moteur de combinaison (110) combinant l'identification de dispositif chiffrée avec l'indicateur de routage par l'intermédiaire de l'apposition de l'indicateur de routage à une extrémité de l'identification de dispositif chiffrée.

8. Système (100) selon la revendication 1, l'identification de dispositif chiffrée faisant au moins huit octets, l'indicateur de routage faisant au moins huit octets et l'identification de dispositif combinée faisant au moins 16 octets.

9. Système (100) selon la revendication 1, dans lequel le moteur de combinaison (110) doit combiner l'identification de dispositif combinée chiffrée avec une étiquette et une valeur indice pour créer une identification temporaire.

10. Procédé (200) comprenant :
la combinaison (204), par un processeur d'un serveur d'authentification, d'informations de dispositif chiffrées associées à l'identification d'un dispositif accédant à un réseau avec un indicateur de routage, la combinaison résultant en une identification de dispositif combinée, l'identification de dispositif chiffrée étant chiffrée à l'aide d'une première clé de chiffrement qui est inconnue d'un ou de plusieurs dispositifs supplémentaires connectés au réseau ;
le chiffrement (206), par le processeur, des informations de dispositif combinées à l'aide d'une seconde clé de chiffrement, la seconde clé de chiffrement étant connue du ou des dispositifs supplémentaires connectés au réseau ; et
la transmission (208), par le processeur, des informations de dispositif combinées chiffrées à un point d'accès lors de la communication des informations depuis le dispositif par l'intermédiaire du réseau.

11. Procédé (200) selon la revendication 10, comprenant :
la génération, par le processeur, d'une identification temporaire correspondant aux informations de dispositif à l'aide de l'identification de dispositif combinée chiffrée, d'une valeur d'étiquette et d'une valeur indice.

12. Procédé (200) selon la revendication 10, dans lequel la première clé de chiffrement est une clé privée qui est connue du serveur d'authentification.

13. Procédé (200) selon la revendication 10, dans lequel le dispositif associé aux informations de dispositif chiffrées est connecté à un premier réseau et l'indicateur de routage identifie un point d'accès associé à un second réseau.

14. Procédé (200) selon la revendication 13, dans lequel la première clé de chiffrement est dissimulée au ou aux dispositifs de réseau supplémentaires et aux entités de réseau connectés au premier réseau et au second réseau autres que le serveur d'authentification.

15. Support de stockage non transitoire lisible par machine (404) stockant des instructions sur celui-ci, les instructions étant exécutables par un processeur (402) d'un système (400) pour amener le système (400) à :
combiner (406) une identification de dispositif chiffrée associée à l'identification d'un dispositif utilisateur accédant à un réseau à l'aide d'un indicateur de routage, la combinaison résultant en une identification de dispositif combinée, l'identification de dispositif chiffrée étant chiffrée à l'aide d'une première clé de chiffrement inconnue d'un ou de plusieurs des dispositifs supplémentaires connectés au réseau ;
chiffrer (408) l'identification de dispositif combinée par l'intermédiaire d'une seconde clé de chiffrement, la seconde clé de chiffrement étant connue du ou des dispositifs supplémentaires connectés au réseau ; et
transmettre (410) l'identification de dispositif combiné chiffrée sur la base de l'indicateur de routage lors de la communication d'informations depuis le dispositif utilisateur par l'intermédiaire du réseau.
